Europäisches Patentamt

European Patent Office

Office européen des brevets

(11) Publication number: **0 456 681 B1**

# EUROPEAN PATENT SPECIFICATION

(45) Date of publication of patent specification: **16.03.94**   (51) Int. Cl.⁵: **G01P 15/08**

(21) Application number: **90902321.0**

(22) Date of filing: **30.01.90**

(86) International application number:
**PCT/GB90/00133**

(87) International publication number:
**WO 90/08962 (09.08.90 90/19)**

(54) **OPTICAL DISPLACEMENT SENSOR.**

(30) Priority: **31.01.89 GB 8902034**

(43) Date of publication of application:
**21.11.91 Bulletin 91/47**

(45) Publication of the grant of the patent:
**16.03.94 Bulletin 94/11**

(84) Designated Contracting States:
**GB**

(56) References cited:
**WO-A-83/03010**
**DE-A- 2 620 914**
**GB-A- 2 185 106**

**Regelungstechnische Praxis, vol. 25, no. 12, December 1983 (Munich, DE), A. Schwaier: "Optische Aufnehmer und Verfahren für die Prozessmesstechnik", pages 503-509**

(73) Proprietor: **Kent Scientific and Industrial Projects Limited**
**The Physics Laboratory,**
**The University of Kent**
**Canterbury, Kent CT2 7NR(GB)**

(72) Inventor: **Jackson, David Alfred**
**8 Woodland Way**
**Canterbury**
**Kent CT2 7LS(GB)**
Inventor: **Newson, Trevor Paul**
**56 Grasmere Road**
**Chestfield**
**Whitstable Kent CT5 3NA(GB)**
Inventor: **Gerges, Awad Samir**
**4 Saint Michael's Road**
**Canterbury**
**Kent CT2 7HG(GB)**

(74) Representative: **Ruffles, Graham Keith et al**
**MARKS & CLERK**
**57-60 Lincoln's Inn Fields**
**London WC2A 3LS (GB)**

Optical Fiber Sensors, 1988 Technical Digest Series, vol. 2, Part 1, Conference Edition 27-29 January 1988, New Orleans, Louisiana, Optical Soc. of America (Washington, DC, US), C.J. Zarobila et al: "Two-fiber optic accelerometers", pages 296-302

Patent Abstracts of Japan, vol. 7, no. 206 (P-222)(1351), 10 September 1983; & JP-A-58100754

Patent Abstracts of Japan, vol. 10, no. 264 (P-495)(2320), 9 September 1986; & JP-A-6188164

## Description

The present invention relates to an optical displacement sensor, for example, a vibration sensor or accelerometer, and more particularly, to such a sensor utilising the principles of a Fabry-Perot type interferometer for sensing vibrations or linear displacements.

Optical sensors based on interferometry are known for a wide range of measurands. For example, our prior International specification No. WO83/03010 describes optical displacement sensing apparatus incorporating a confocal Fabry-Perot interferometer in which one of the confocal mirrors is resiliently mounted so that the mirrors are relatively movable in response to an external stimulus applied to the interferometer, and servo means is responsive to the optical output from the interferometer to adjust an optical parameter, upon relative displacement of the mirrors, in a manner to maintain and restore the optical transmissivity of the interferometer and thereby monitor the displacement. Conveniently, this interferometer is addressed via a mono-mode optical fibre and, similarly, the output from the interferometer may be detected via a second optical fibre.

Optical fibre accelerometers have also been proposed in which a mono-mode optical fibre, itself, forms part of the sensing element. Although these devices offer very high resolution, their performance is critically dependant on the opto-mechanical properties of the fibre.

The present invention employs an optical displacement sensor in which the relative displacement of a sensing element, in response to an external stimulus applied to the sensor, is detected by a Fabry-Perot interferometer, and in which one of the mirrors of the interferometer is mounted on the sensing element and the other mirror is formed by the adjacent end of an optical fibre via which the interferometer is illuminated or energised. A sensor having these features is known from GB-A-2 185 106. The invention is characterised in that the sensing element comprises a resilient diaphragm weighted so as to remain stationary upon application of the external stimulus to the sensor.

The sensor of the invention is particularly suitable for use as an accelerometer and, as such, is designed to measure only a single orthogonal component of acceleration. It shows only a small cross sensitivity to other components. Perturbations caused by temperature changes may be relatively small and, with appropriate choice of material, very high temperature operation is possible.

The diaphragm may be mounted in a housing or other mounting means adapted to be coupled to the external stimulus to be sensed, and the optical fibre which is preferably a mono-mode optical fibre, may also be supported by the mounting means with its optical axis corresponding to the optical axis of the mirror mounted on the diaphragm.

In a preferred embodiment of the invention, the mirror mounted on the diaphragm is a spherical metal mirror and the adjacent end of the optical fibre forms both the optical input and output of the interferometer. A laser light source may be connected to the proximal end of the optical fibre for supplying an optical or light signal for illuminating the interferometer. The output signal transmitted through the optical fibre may be recovered therefrom in any suitable manner and be detected by a photo-detector which is connected to supply an electrical signal, corresponding to the intensity of the optical output, to signal processing means for providing a measurement of the vibration or displacement sensed by the sensor. The use of an optical fibre for addressing the sensor enables the latter to be interrogated remotely.

Conveniently, with the exception of the optical fibre via which the sensor is addressed, the sensor is of an all-metal construction, including the mirror and diaphragm or other sensing element. However, for certain specific applications, other materials, such as glass, quartz or sapphire may be used for the diaphragm and/or mirror.

The present invention enables the following to be achieved:-

1) a miniature high resolution accelerometer and vibration sensor;

2) an optical cavity formed by an optical fibre end and spherical metal mirror attached to a sensing diaphragm;

3) an optical cavity which can be interrogated remotely;

4) an all-metal construction (apart from the optical fibre lead) which allows operation at high temperatures, for example, at least 400°C;

5) a diaphragm and mirror which may be made of non-magnetic materials so that operation in microwave fields or electrical machines is possible.

6) sensitivity which can be tuned by changing the diaphragm thicknes or mass. The range and resolution of the sensor depends on the properties of the diaphragm which may be designed appropriately for a given application. The chief environmental perturbation is that of temperature on the effective spring constant of the diaphragm. Diaphragm technology is mature and a range of materials and designs exist which facilitate the practical implementation of the present invention for a wide range of applications:

3

7) the mass of the spherical mirror may be arranged so that it is equally distributed on opposite sides of the diaphragm to ensure minimum sensitivity to orthogonal motions - hence, a three-axis configuration is possible;

8) operation as a pressure sensor is possible by correct choice of the diaphragm thickness.

The sensor according to the invention may be designed in a back-to-back configuration in which a mirror image of the Fabry-Perot interferometer is constructed on the opposite side of the resilient diaphragm or other sensing element.

Such a back-to-back design provides additional advantages with appropriate optical signal processing. For example, differentially combining the interferometer outputs doubles the sensitivity and minimises the effects of source noise. Summing the outputs provides information regarding the thermal expansion of the assembly enabling the temperature of the environment to be measured: this may also be used to correct for thermal variation of the spring constant of the diaphragm, if necessary. Common mode rejection can be used to improve the accuracy of the sensor.

In order that the present invention can be more readily understood, reference will be made to the accompanying drawings, in which:-

Figure 1 illustrates an axial section through one embodiment of the invention;

Figure 2 illustrates a block schematic circuit diagram, including elements for calibrating the sensor and signal processing for detecting the output of the sensor;

Figure 3 is a plot illustrating experimental results;

Figure 4 is an oscilloscope picture of interferometer waveforms; and

Figure 5 illustrates an axial section through a second embodiment of the invention.

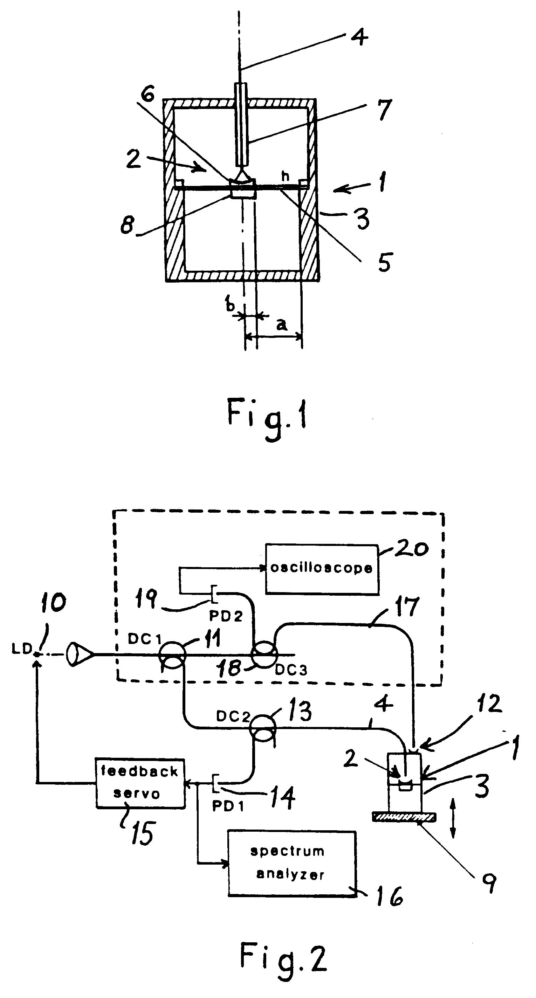

Referring to Figure 1 of the drawings, the sensor 1 comprises a hemispherical Fabry-Perot interferometer 2 disposed in a cylindrical housing 3 and illuminated via a mono-mode optical fibre 4 extending through one end of the housing. Mounted within the housing is a resilient or elastic diaphragm 5 forming the sensing element and a spherical mirror 6 constituting the outer mirror of the interferometer is attached to the centre of the diaphragm opposite the distal end of the optical fibre 4. The latter projects into the housing through a capilliary tube 7 and its distal end, cleaved normally to the axis of the fibre, forms the inner mirror of the interferometer. The axis of the fibre 4 is adjusted to match the optical axis of the spherical mirror and the cavity length is adjusted to give maximum visibility of the interference fringes.

A suitable mass 8 is secured centrally to the diaphragm on the opposite side to the mirror 6 so as to counterbalance the weight of the latter and equally distribute the weight on either side of the diaphragm to ensure minimum sensitivity to orthogonal motions. The total weight of the mirror 6 and mass 8 is such that, when the housing 3 moves in synchronism with and in repsonse to an external stimulus, the diaphragm 5 remains stationary.

Except for the optical fibre 4, all the components of the sensor 1 illustrated in Figure 1 may be made from metal to enable the sensor to withstand high temperature.

The sensing element is constituted by the loaded elastic diaphragm 5 which effectively has a rigid disc at its centre. The solidity ratio of the diaphragm is defined as the ratio of the rigid centre and diaphragm radii (b/a). The spherical mirror 6 is attached centrally to the rigid centre of the diaphragm. The static deflection of the centre of the diaphragm is:

$$Y_o = A_s \frac{F a^2}{16 \pi D} \tag{1}$$

D is called the flexural rigidity of the diaphragm and $A_s$ is a numerical coeficient which depends on the solidity ratio [6,7],

$$D = \frac{E h^3}{12 (1 - v^2)} \tag{2}$$

$$A_s = 4 \left( \frac{c^2 - 1}{4 c^2} - \frac{\ln^2 c}{c^2 - 1} \right) \tag{3}$$

where h is the thickness of the diaphragm, E its modulus of elasticity in tension and compression, $v$ its Poisson's ratio and c is the reciprocal of its solidity ratio (c = a/b).

4

For small deflections, the displacement is proportional to the applied axial force (F), and hence to the axial linear acceleration (r). If the mass of the diaphragm is much less than that of the solid central mass (8), the sensing element can be approximated as an equivalent mass spring system. The spring constant is determined from equation (1) as $K = F/Y_o$. The fundamental mode angular frequency of the sensing element is calculated by $\omega_o = \sqrt{K/M}$.

The optical phase change $\Delta\phi$ induced in the hemispherical interferometer (2) by a displacement $Y_o$ is:

$$\Delta\phi = \frac{4\pi}{\lambda}Y_o = \frac{r}{\lambda\pi f_o^2} \tag{4}$$

where r is the linear acceleration magnitude to be measured (r = F/M), $\lambda$ is the wavelength of the light illuminating the system and $f_o$ is the fundamental frequency of the vibrating system. The static resolution ($r_{min}$) of the accelerometer is limited by the phase resolution of the interferometer $\Delta\phi_{min}$ and is a function of the fundamental frequency such that

$$r_{min} = \lambda\pi f_o^2 \Delta\phi_{min} \tag{5}$$

Figure 2 illustrates a calibrating and signal processing system used with the sensor. In Figure 2, the housing 3 of the sensor 1 is suitably mechanically coupled, via its end opposite the optical fibre 4, to a periodically vibrating test object 9, the acceleration of whose vibrations is to be measured. The interferometer 2 is arranged to be illuminated by a laser diode 10, for example, a Mitsubishi L4107,787 nm, via a directional coupler 11, through which light is supplied to a calibrating interferometer 12. The sensor interferometer 2 is addressed via the optical fibre 4 which also serves as the output channel from the interferometer. The output signal is recovered from the optical fibre 4 via a directional coupler 13 and is detected by a photodiode detector 14 which produces an electrical output signal corresponding to the intensity of the interferometer output signal. This electrical output signal is applied to a feedback servo 15 for locking the laser diode 10 to maintain the interferometer 2 at quadrature. It is also fed to a spectrum analyser 16 which processes the electrical signal and produces an output corresponding to the acceleration of the periodic vibrations being sensed, which output, in turn, can be processed to compute the acceleration.

The calibrating interferometer 12 is also based upon a hemispherical cavity and is fixed to the top of the sensor housing 3 with its axis parallel to the direction of vibration. It is addressed via an optical fibre 17 illuminated by the laser diode 10 and the output from this calibrating interferometer is recovered from the optical fibre 17 via a directional coupler 18 and is detected by a photodiode detector 19 which supplies an electrical signal corresponding to the intensity of the output to an oscilloscope 20.

In one experimental test, the vibrating object or vibrator 9 was driven sinusoidally in the frequency range 40-900 Hz. The amplitude displacement of the vibrator ($d_{max}$) was set such that the phase change induced in calibrating interferometer 12 corresponded to $2\pi$ optical radians, (ie, $d_{max} = \lambda/2$) thus imparting a calculable acceleration to the diaphragm 5. The spectrum of the intensity output of the interferometer 2 comprises harmonics of the acceleration frequency, whose amplitudes were measured using the spectrum analyser 16. By evaluating ratios of harmonic amplitudes, and using the usual Fourier expansion of a phase modulated signal, the displacement amplitude of the mirror 6 arising from the acceleration was determined. This method of signal processing was expedient and accurate, although more appropriate techniques exist for use in a practical system. The cross-sensitivity to accelerations orthogonal to the symmetry axis of the sensor was measured by mounting the accelerometer with its axis perpendicular to that of the vibrator.

In the experiment a steel diaphragm 5 with radius of 9.5 mm and thickness of 0.51 mm was used. The accelerometer 1 was constructed with a curved mirror 6, radius of curvature $\approx 4$ mm. The system was tested using two different loadings of the diaphragm, giving masses (8) of 0.91 and 0.59 grams respectively. The first resonance frequency of the diaphragm was 465 and 582 Hz respectively which is in good agreement with theoretical prediction.

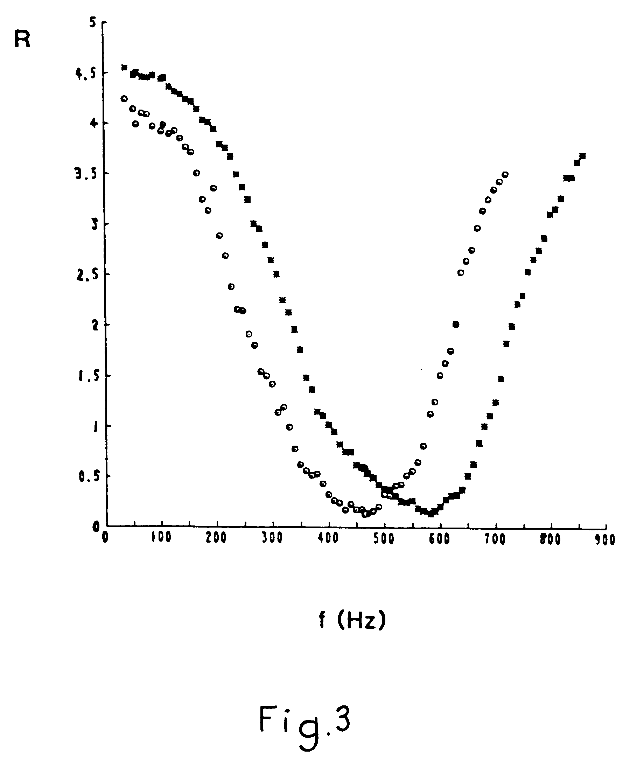

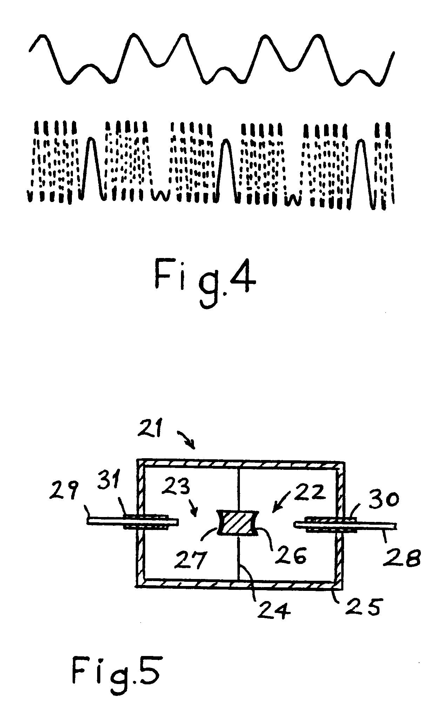

The signal to noise ratio was measured using a vibration amplitude corresponding to one interference fringe observed at the output of 12, and at a frequency of 140 Hz. The signal to noise ratio was found to be 79.2 dBV in a bandwidth of 7.65 Hz, corresponding to a phase resolution of $4 \times 10^{-5}$ rad/$\sqrt{\text{Hz}}$. The noise arises primarily from intensity and frequency fluctuations of the source and is, hence, smaller at higher frequencies. The experimentally determined diaphragm displacements as a function of frequency were used together with a phase resolution of $4 \times 10^{-5}$ rad/$\sqrt{\text{Hz}}$ to calculate the acceleration resolution, R, of the sensor, and the results are plotted in Figure 3. It may be seen that the resolution is better than $5\mu$g($g \approx 9.81 \text{ms}^{-2}$). Output waveforms of the interferometers 2 and 12 are shown in Figure 4. The cross-sensitivity to orthogonal components of acceleration was measured to be better than -32.1 dB.

The above described embodiment comprises a non-electrical accelerometer based upon an all metal optical cavity which can be interrogated remotely. Acceleration sensitivity exceeds $10^{-6}$g and it can operate at temperatures as low as 70K and above 1000K which cannot be achieved by any form of conventional accelerometer or contact vibration sensor.

Figure 5 illustrates a back-to-back configuration in which mirror image Fabry-Perot optical cavities 22,23 are arranged on opposite sides of a resilient diaphragm sensing element 24, whereby common mode rejection can be utilised to improve the accuracy of measurements sensed by the sensor 21. Hence, this embodiment comprises a cylindrical housing 25 having the resilient diaphragm 24 mounted centrally within the housing. Spherical metal mirrors 26,27 are secured centrally to opposite sides of the diaphragm and form the outer mirrors of the respective interferometers. The inner mirrors are formed by the distal ends of mono-mode optical fibres 28,29 via which each interferometer is illuminated. Each optical fibre 28,29 is secured in a capilliary tube 30,31 extending through the adjacent end wall of the housing and the axis of its fibre is adjusted to match the optical axis of its associated spherical mirror. The diaphragm 24 is weighted by the mirrors and, if necessary, by additional masses in the mirror mountings, so that when the housing 25 is suitably arranged to detect an external stimulus, the housing moves in synchronism with the stimulus whilst the diaphragm remains stationary. Except for the optical fibres 28,29, the sensor 21 may be an all metal sensor.

Whilst particular embodiments have been described, it will be understood that modifications can be made without departing from the scope of the invention. For example, signal processing can be based on either homodyne-closed loop; heterodyne-open loop or white light techniques.

Moreover, other materials other than metals can be used in the construction of the instrument. For example, quartz could be used as the diaphragm material with the mirror cut into the quartz, or ceramics could be used for higher temperatures of operation, i.e. greater than 400°C.

It will be seen that the invention provides a high resolution optical vibration sensor having low weight and also having the ability to carry out a remote operation via a fibre optic link. Moreover, the instrument is not affected by electromagnetic interference (EMI). It also has a low environmental sensitivity to temperature as well as a low environmental sensitivity to source wavelength drift.

## Claims

1. An optical displacement sensor in which the relative displacement of a sensing element, in response to an external stimulus applied to the sensor, is detected by a Fabry-Perot interferometer, and in which one of the mirrors of the interferometer is mounted on the sensing element and the other mirror is formed by the adjacent end of an optical fibre via which the interferometer is illuminated or energised, characterised in that the sensing element comprises a resilient diaphragm weighted so as to remain stationary upon application of the external stimulus to the sensor.

2. An optical displacement sensor as claimed in claim 1, in which the diaphragm is mounted in a housing or other mounting means adapted to be coupled to the external stimulus to be sensed, and the optical fibre is also supported by the mounting means with its optical axis corresponding to the optical axis of the mirror mounted on the diaphragm.

3. An optical displacement sensor as claimed in claim 1 or 2, in which the optical fibre is a mono-mode optical fibre.

4. An optical displacement sensor as claimed in claim 1, 2 or 3, in which the mirror mounted on the diaphragm is a spherical metal mirror and the adjacent end of the optical fibre forms both the optical input and output of the interferometer.

5. An optical displacement sensor as claimed in any one of the preceding claims, in which, with the exception of the optical fibre, the sensor is of an all-metal construction, including the diaphragm and its associated mirror.

EP 0 456 681 B1

6. An optical sensor as claimed in any one of claims 1 to 4, in which the diaphragm and/or its associated mirror are made of glass, quartz, sapphire or ceramic.

7. An optical displacement sensor as claimed in any one of the preceding claims, in which a laser light source is connected to the optical fibre for supplying an optical signal for illuminating the interferometer.

8. An optical displacement sensor as claimed in claim 7, in which an optical output signal transmitted through the optical fibre is recovered therefrom and detected by a photo-detector which is connected to supply an electrical signal, corresponding to the intensity of the optical output signal, to signal processing means for providing a measurement of the vibration or displacement sensed by the sensor.

9. An optical displacement sensor as claimed in any one of the preceding claims, in which a mass is secured to the diaphragm on the opposite side to the mirror so as to counter balance the weight of the latter.

10. An optical displacement sensor as claimed in any one of the preceding claims, including a calibrating interferometer fixed to the mounting means of the diaphragm with its axis parallel to the direction of vibration.

11. An optical displacement sensor as claimed in claim 10, in which the optical output of the calibrating interferometer is detected by a photodiode detector which supplies an electrical signal corresponding to the intensity of the optical output to an oscilloscope.

12. An optical displacement sensor as claimed in any one of the preceding claims, comprising a back-to-back configuration in which a mirror image Fabry-Perot interferometer is arranged on the opposite side of the resilient diaphragm sensing element.

**Patentansprüche**

1. Optischer Versetzungssensor, bei dem die relative Versetzung eines Sensorelements infolge eines auf den Sensor gegebenen, externen Stimulus von einem Fabry-Pérot-Interferometer festgestellt wird, und bei dem einer der Spiegel des Interferometers auf dem Sensorelement angebracht ist, und der andere Spiegel von dem angrenzenden Ende einer Lichtleitfaser gebildet wird, über die das Interferometer beleuchtet oder erregt wird, dadurch gekennzeichnet, daß das Sensorelement eine elastische Membran aufweist, die so beschwert ist, daß sie dann, wenn der externe Stimulus auf den Sensor gegeben wird, stationär bleibt.

2. Optischer Versetzungssensor gemäß Anspruch 1, bei dem die Membran in einem Gehäuse oder einem anderen Montagemittel angebracht ist, das so ausgelegt ist, daß es an den zu fühlenden, externen Stimulus angekoppelt werden kann, und die Lichtleitfaser ebenfalls von dem Montagemittel getragen wird, wobei ihre optische Achse mit der optischen Achse des auf der Membran angebrachten Spiegels übereinstimmt.

3. Optischer Versetzungssensor gemäß Anspruch 1 oder 2, bei dem die Lichtleitfaser eine Monomodus-Lichtleitfaser ist.

4. Optischer Versetzungssensor gemäß Anspruch 1, 2 oder 3, bei dem der auf der Membran angebrachte Spiegel ein sphärischer Metallspiegel ist, und das angrenzende Ende der Lichtleitfaser sowohl den optischen Eingang, als auch den optischen Ausgang des Interferometers bildet.

5. Optischer Versetzungssensor gemäß irgendeinem der vorhergehenden Ansprüche, bei dem, mit Ausnahme der Lichtleitfaser, der Sensor eine Ganzmetallkonstruktion ist, die die Membran und ihren zugehörigen Spiegel umfaßt.

6. Optischer Versetzungssensor gemäß irgendeinem der Ansprüche 1 bis 4, bei dem die Membran und/oder ihr zugehöriger Spiegel aus Glas, Quarz, Saphir oder Keramik bestehen.

7

**7.** Optischer Versetzungssensor gemäß irgendeinem der vorhergehenden Ansprüche, bei dem eine Laser-Lichtquelle mit der Lichtleitfaser verbunden ist, um ein optisches Signal zum Beleuchten des Interferometers zu liefern.

**8.** Optischer Versetzungssensor gemäß Anspruch 7, bei dem ein über die Lichtleitfaser übertragenes, optisches Ausgangssignal zurückgewonnen wird und von einem Photodetektor nachgewiesen wird, der so angeschlossen ist, daß er ein elektrisches Signal, das der Intensität des optischen Ausgangssignals entspricht, auf Signalverarbeitungsmittel gibt, um eine Messung der von dem Sensor gefühlten Schwingung oder Versetzung auszuführen.

**9.** Optischer Versetzungssensor gemäß irgendeinem der vorhergehenden Ansprüche, bei dem auf der zu dem Spiegel entgegengesetzten Seite eine Masse an der Membran befestigt ist, so daß das Gewicht des Spiegels kompensiert wird.

**10.** Optischer Versetzungssensor gemäß irgendeinem der vorhergehenden Ansprüche, der ein Eich-Interferometer umfaßt, das an dem Montagemittel der Membran befestigt ist, wobei seine Achse parallel zu der Schwingungsrichtung ist.

**11.** Optischer Versetzungssensor gemäß Anspruch 10, bei dem das optische Ausgangssignal des Eich-Interferometers von einem Photodioden-Detektor nachgewiesen wird, der ein der Intensität des optischen Ausgangssignals entsprechendes, elektrisches Signal auf ein Oszilloskop gibt.

**12.** Optischer Versetzungssensor gemäß irgendeinem der vorhergehenden Ansprüche, der eine Rücken-an-Rücken-Konfiguration aufweist, bei der ein spiegelbildliches Fabry-Pérot-Interferometer auf der entgegengesetzten Seite des Membran-Sensorelements angeordnet ist.

**Revendications**

**1.** Détecteur de déplacement optique dans lequel le déplacement relatif d'un élément de détection, en réponse à un stimulus externe appliqué au détecteur, est détecté au moyen d'un interféromètre de Fabry-Perot et dans lequel l'un des miroirs de l'interféromètre est monté sur l'élément de détection et l'autre miroir est formé par l'extrémité adjacente d'une fibre optique via laquelle l'interféromètre est éclairé ou excité, caractérisé en ce que l'élément de détection comprend un diaphragme élastique équilibré de manière à rester stationnaire suite à l'application du stimulus externe au détecteur.

**2.** Détecteur de déplacement optique selon la revendication 1, dans lequel le diaphragme est monté dans un boîtier ou dans tout autre moyen de montage conçu pour être couplé au stimulus externe qui doit être détecté et la fibre optique est également supportée par le moyen de montage, son axe optique correspondant à l'axe optique du miroir monté sur le diaphragme.

**3.** Détecteur de déplacement optique selon la revendication 1 ou 2, dans lequel la fibre optique est une fibre optique monomode.

**4.** Détecteur de déplacement optique selon la revendication 1, 2 ou 3, dans lequel le miroir monté sur le diaphragme est un miroir en métal sphérique et l'extrémité adjacente de la fibre optique forme à la fois l'entrée et la sortie optique de l'interféromètre.

**5.** Détecteur de déplacement optique selon l'une quelconque des revendications précédentes, dans lequel, à l'exception de la fibre optique, le détecteur est d'une construction tout métal, y compris le diaphragme et son miroir associé.

**6.** Détecteur de déplacement optique selon l'une quelconque des revendications 1 à 4, dans lequel le diaphragme et/ou son miroir associé sont réalisés en verre, en quartz, en saphir ou en céramique.

**7.** Détecteur de déplacement optique selon l'une quelconque des revendications précédentes, dans lequel une source de lumière laser est connectée à la fibre optique pour appliquer un signal optique pour éclairer l'interféromètre.

**8.** Détecteur de déplacement optique selon la revendication 7, dans lequel un signal de sortie optique transmis au travers de la fibre optique en est récupéré et est détecté par un photodétecteur qui est connecté pour appliquer un signal électrique, en correspondance avec l'intensité du signal de sortie optique, à un moyen de traitement de signal pour produire une mesure de la vibration ou du déplacement détecté par le détecteur.

**9.** Détecteur de déplacement optique selon l'une quelconque des revendications précédentes, dans lequel une masse est fixée au diaphragme sur le côté opposé au miroir de manière à équilibrer le poids de ce dernier.

**10.** Détecteur de déplacement optique selon l'une quelconque des revendications précédentes, incluant un interféromètre d'étalonnage fixé au moyen de montage du diaphragme, son axe étant parallèle à la direction de vibration.

**11.** Détecteur de déplacement optique selon la revendication 10, dans lequel la sortie optique de l'interféromètre d'étalonnage est détectée par un détecteur à photodiode qui applique un signal électrique correspondant à l'intensité de la sortie optique à un oscilloscope.

**12.** Détecteur de déplacement optique selon l'une quelconque des revendications précédentes, comprenant une configuration dos à dos dans laquelle un interféromètre de Fabry-Perot à image miroir est agencé sur le côté opposé de l'élément de détection à diaphragme élastique.

Fig.1

Fig.2

Fig.3

Fig.4

Fig.5